# EUROPÄISCHE PATENTSCHRIFT

(11) **EP 1 655 081 B1**
(45) Veröffentlichungstag und Bekanntmachung des Hinweises auf die Patenterteilung: **26.08.2015**
(21) Anmeldenummer: 05020654.9
(22) Anmeldetag: 22.09.2005
(51) Int. Cl.: B08B 1/00, B08B 1/04, B23K 26/16

(54) **Maschinelle Vorrichtung zum Reinigen von Auflageleisten von Werkstückauflagen**
Mechanical device for cleaning support rails of workpiece supports
Dispositif mécanique pour le nettoyage de rails de maintien de support de pièces à usiner

(30) Priorität: 13.10.2004 DE 202004015922 U
(43) Veröffentlichungstag der Anmeldung: 10.05.2006
(73) Patentinhaber: Trumpf Grüsch AG, 7214 Grüsch (CH)
(72) Erfinder: Patrik Graf, 7013 Domat/Ems (CH); Andreas Janutin, 2000 Chur (CH); Peter Dubler, 7138 Zizers (CH); Joos Luck, 7232 Furna (CH)
(74) Vertreter: Kohler Schmid Möbus Patentanwälte

(56) Entgegenhaltungen:
- WO-A-2004/043638
- DE-A1- 2 634 820
- DE-A1- 3 939 489

## Beschreibung

Die Erfindung betrifft eine maschinelle Vorrichtung zum Reinigen von Auflageleisten von Werkstückauflagen an Maschinen für die Werkstückbearbeitung, insbesondere an Maschinen zum thermischen Schneiden von Werkstücken, mit wenigstens einem Reinigungsorgan und mit einer Vorschubeinrichtung, mittels derer das Reinigungsorgan und eine zu reinigende Auflageleiste mit einer Vorschubbewegung in Längsrichtung der Auflageleiste relativ zueinander bewegbar sind.

Eine derartige Vorrichtung, gemäß dem Oberbegriff des Anspruchs 1, ist bekannt aus WO 2004/043638 A1. Im Falle des Standes der Technik ist eine Reinigungsvorrichtung zum Abtragen von Verunreinigungen manuell an der betreffenden Auflageleiste entlang zu bewegen.

DE 26 34 820 A1 beschreibt ein Gerät zum Reinigen von Lamellen, welches Lamellen mittels Bürsten beidseitig reinigt.

Aus DE 39 39 489 A1 ist eine Vorrichtung zum Reinigen einer Dachrinne bekannt, die beim Reinigen entlang der Dachrinne verschoben wird. Gegebenenfalls kann über eine Übersetzung auch ein automatischer Antrieb der Vorrichtung entlang der Dachrinne erfolgen.

US 6,127,648 beschreibt eine Vorrichtung zur Reinigung eines Schlackeauffangbetts unterhalb der Werkstückauflage einer Laserschneidmaschine, welches zum Aufsammeln von bei der Werkstückbearbeitung durch die Werkstückauflage fallenden Schmutzes, insbesondere Schlacke, dient. Zum Reinigen des Schlackeauffangbetts ist ein länglicher Reinigungsblock mittels eines motorischen Antriebs über die gesamte Länge des Schlackeauflagebetts verschiebbar.

DE 297 17 277 U1 beschreibt eine Reinigungsvorrichtung für eine Leitwalze in einer Druckmaschine. Eine transportable Reinigungsvorrichtung wird auf die drehbar gelagerte Leitwalze aufgesetzt. Die Reinigungsvorrichtung weist eine Reinigungsbürste sowie motorisch angetriebene Transportrollen auf. Aufgrund einer Schrägstellung der Drehachsen der Transportrollen gegenüber der Längsachse der Leitwalze wird die Reinigungsvorrichtung durch Drehung der Transportrollen auch entlang der Längsachse der Leitwalze mit einer Vorschubbewegung angetrieben.

Der WO 2005/077552 A1, welche Stand der Technik nach Artikel 54 Abs. 3 EPÜ bildet, ist eine Reinigungsvorrichtung zum Reinigen von Auflagestäben zu entnehmen, welche einen automatischen Antrieb entlang des zu reinigenden Stabes aufweist.

Eine handhabungsfreundliche Vorrichtung zum Reinigen von Auflageleisten von Werkstückauflagen an Maschinen für die Werkstückbearbeitung bereitzustellen, hat sich die vorliegende Erfindung zum Ziel gesetzt.

Erfindungsgemäß gelöst wird diese Aufgabe durch die maschinelle Vorrichtung gemäß Anspruch 1. Im Falle der Erfindung ist demnach ein motorischer Vorschubantrieb vorgesehen mit einem Vorschuborgan, das zur Erzeugung der Vorschubbewegung an die zu reinigende Auflageleiste angelegt wird. Zumindest ein wesentlicher Anteil der Vorschubkraft wird somit nicht von dem Bediener der Vorrichtung sondern vielmehr von deren Eigenantrieb aufgebracht. Zur Erzeugung der Vorschubbewegung nutzt der erfindungsgemäße Vorschubantrieb die zu reinigende Auflageleiste. Der Vorschubantrieb selbst lässt sich folglich mit verhältnismäßig wenig Bauteilen konstruktiv realisieren. Gegenüber manuell zu bewegenden Vorrichtungen ergibt sich aufgrund des Vorschubantriebes allenfalls eine geringfügige Vergrößerung von Bauvolumen und Eigengewicht der Gesamtvorrichtung.

In bevorzugter Ausgestaltung der Erfindung läuft wenigstens ein Vorschuborgan im angetriebenen Zustand in einer in Längsrichtung der zugeordneten Auflageleiste verlaufenden Ebene um. Eine derartige Vorrichtungsbauart zeichnet sich insbesondere durch ihre kompakte Bauweise aus. Entsprechendes gilt für die maschinelle Vorrichtung nach Anspruch 2.

In weiterer vorteilhafter Ausgestaltung der Erfindung ist wenigstens ein Vorschuborgan an eine Längsseite der Auflageleiste anlegbar. Diese Maßnahme ist insbesondere vor dem Hintergrund sinnvoll, dass Auflageleisten der zu reinigenden Art üblicherweise verhältnismäßig dünn sind und daher an ihrer Ober- sowie an ihrer Unterseite nur verhältnismäßig kleine, zur Anlage nutzbare Flächen aufweisen. Zudem ist die Oberseite von Auflageleisten in der Regel mit Vorsprüngen versehen, an denen das zu lagernde Werkstück punktuell abgestützt wird. Ein Anlegen von Vorschuborganen der Vorschubantriebe an derart unebenen Flächen ließe sich allenfalls mit verhältnismäßig großem konstruktivem Aufwand realisieren. Demgegenüber wird bei Anlage eines Vorschuborgans an eine Längsseite der Auflageleiste eine verhältnismäßig große und abgesehen von anhaftenden Verschmutzungen im Wesentlichen ebene Fläche als Widerlager genutzt.

Bevorzugtermaßen ist wenigstens ein Vorschuborgan als Walze ausgebildet, die an ihrer Mantelfläche an die Auflageleiste anlegbar ist und eine in Querrichtung der Auflageleiste verlaufende Drehachse aufweist.

Gemäß Anspruch 3 ist einem Vorschuborgan des Vorschubantriebes an der gegenüberliegenden Seite der Auflageleiste wenigstens ein Gegenhalter zugeordnet. Im Zusammenspiel bewirken Vorschuborgan und Gegenhalter eine Führung der Vorrichtung in Längsrichtung der Auflageleiste. Auch diese selbsttätige Führung entlastet den Bediener der Vorrichtung.

Im Falle einer weiteren vorteilhaften Ausgestaltung der Erfindung sind wenigstens ein Vorschuborgan und der zugeordnete Gegenhalter unter Veränderung der Weite ihres Zwischenraumes relativ zueinander zustellbar. Diese Einstellmöglichkeit gestattet eine Anpassung der Vorrichtung an wechselnde Dicken der zu reinigenden Auflageleisten.

In weiterer bevorzugter Ausgestaltung der Erfindung ist wenigstens ein Vorschuborgan und/oder der zugeordnete Gegenhalter unter der Wirkung einer elastischen Kraft an die Auflageleiste anlegbar. Aufgrund dieser federnden Lagerung können die Vorschuborgane und/oder die Gegenhalter Unebenheiten an der zu reinigenden Auflageleiste ausweichen. Die Vorschubbewegung wird durch derartige Unebenheiten folglich nicht oder zumindest nicht nennenswert behindert.

Im Falle einer weiteren vorteilhaften Ausgestaltung der Erfindung ist außerdem wenigstens ein Gegenhalter um eine Drehachse drehbar, die gleichgerichtet mit der Drehachse eines zugeordneten Vorschuborgans verläuft.

Die Gegenhalter können folglich bei der Vorschubbewegung auf der Auflageleiste abrollen. Gegenüber einer starren Lagerung der Gegenhalter verringert sich die beim Vorschub zu überwindende Reibung beträchtlich.

Eine weitere bevorzugte Ausgestaltung der Erfindung zeichnet sich dadurch aus, dass auch der oder die Gegenhalter als Vorschuborgan ausgebildet sind (Anspruch 4). Die Vorschuborgane übernehmen damit eine Doppelfunktion. Infolge der Anordnung von Vorschuborganen an zwei einander gegenüberliegenden Seiten der betreffenden Auflageleiste ergibt sich eine gleichförmige Vorschubbewegung.

Gleichfalls der Optimierung der Vorschubbewegung dient die bevorzugte Maßnahme, wonach ein und derselben Seite der Auflageleiste mehrere in deren Längsrichtung hintereinander liegende Vorschuborgane zugeordnet sind. Insbesondere lassen sich im Falle dieser Bauart auch verhältnismäßig große Vorschubkräfte einleiten.

Ausweislich Anspruch 5 ist in Weiterbildung der Erfindung einer bevorzugten Ausgestaltung vorgesehen, dass wenigstens ein Reinigungsorgan im Betrieb an einer zu reinigenden Auflageleiste in Richtung auf diese vorgespannt ist. Aufgrund dieser Vorspannung wird insbesondere die gewünschte Reinigungswirkung erzielt. Die vorspannbaren Reinigungsorgane können unterschiedlichster Bauart sein. In Frage kommen beispielsweise Bürstenelemente, Schaber oder Reinigungswalzen.

Vorteilhaft gleichfalls vorgesehen ist die in Anspruch 6 beschriebene Vorrichtungsbauweise. Demnach bildet wenigstens ein Vorschuborgan und/oder wenigstens ein Gegenhalter gleichzeitig ein Reinigungsorgan. Die Funktionen "Reinigung von Auflageleisten" und "Vorschubantrieb" bzw. "Führung der Vorschubbewegung" werden mit ein und demselben Bauteil realisiert. Eine besonders kompakte Vorrichtungsbauweise ist die Folge.

In weiterer bevorzugten Ausgestaltung der Erfindung bilden ein und derselben Seite der Auflageleiste zugeordnete und in deren Längsrichtung hintereinander liegende Vorschuborgane jeweils ein Reinigungsorgan aus. Eine besonders wirksame Entfernung von Verunreinigungen ist dadurch sichergestellt.

Sind in Längsrichtung der Auflageleiste hintereinander liegenden Vorschub- und Reinigungsorgane an ihrem an die Auflageleiste anlegbaren Teil verschiedenartig ausgebildet (Anspruch 7), so lässt sich insbesondere die Reinigungswirkung optimieren. Beispielsweise können voreilende Vorschub- und Reinigungsorgane eine Grobreinigung durchführen, während nacheilende Vorschub- und Reinigungsorgane die Entfernung von feinen Verunreinigungen übernehmen.

Gemäß Anspruch 8 weist wenigstens ein Vorschuborgan und/oder wenigstens ein Gegenhalter und/oder wenigstens ein Reinigungsorgan an der zu der Auflageleiste hin liegenden Seite wenigstens einen Vorsprung auf. Derartige Vorsprünge können zum einen zum Abtragen von Verunreinigungen genutzt werden. Zum andern sorgen derartige Vorsprünge für einen weitestgehend schlupffreien Vorschubantrieb.

Bevorzugt werden leistenartige Vorsprünge, die entlang der zugeordneten Seite der Auflageleiste sowie in Querrichtung der Auflageleiste verlaufen.

Ausweislich der Ansprüche 9 und 10 sind in Weiterbildung einer bevorzugten Ausgestaltung der Erfindung besondere Vorkehrungen zur Führung der Vorrichtung bei der Vorschubbewegung getroffen. Die gemäß Anspruch 9 beidseits eines Vorrichtungs-Grundkörpers vorgesehenen Führungshandhaben ermöglichen auch eine einfache Übergabe der sich in Vorschubrichtung bewegenden Vorrichtung von einem Bediener an einen anderen. Die in Anspruch 10 beschriebene Leiteinrichtung ist im Hinblick darauf vorgesehen, dass Auflageleisten üblicherweise auf einer Tragstruktur angebracht sind, die ihrerseits in Querrichtung der Auflageleisten verlaufende Träger umfasst. Die anspruchsgemäße Leiteinrichtung verhindert Kollisionen zwischen derartigen Trägern und der sich in Vorschubrichtung an einer zu reinigenden Auflageleiste entlang bewegenden Vorrichtung.

Zweckmäßigerweise kann die Leiteinrichtung wenigstens eine Leitplatte aufweisen, die sich entlang einer Längsseite der Auflageleiste erstreckt und an einer in Längsrichtung der Auflageleiste gelegenen Stirnseite eine Leitfläche aufweist.

Ebenfalls im Interesse einer uneingeschränkten Funktionsfähigkeit der Vorrichtung ist in weiterer bevorzugter Ausgestaltung der Erfindung in dem Antriebsstrang der Vorrichtung zwischen dem Vorschubantriebsmotor und wenigstens einem Vorschuborgan eine Überlastsicherung, vorzugsweise eine Sicherheitskupplung, vorgesehen. Bei einer Blockierung der Vorschubbewegung verhindert eine derartige Überlastsicherung ansonsten zu befürchtende Schäden an Komponenten des Vorschubantriebes.

Nachstehend wird die Erfindung anhand schematischer Darstellungen zu Ausführungsbeispielen näher erläutert. Es zeigen:
- Fig. 1: eine erste Bauart einer Vorrichtung zum Reinigen von Werkstück-Auflageleisten im Einsatz an einer Werkstück-Auflageleiste einer Laserschneidmaschine,
- Fig. 2: die Anordnung nach Fig. 1 in der Draufsicht in Richtung des Pfeils II in Fig. 1,
- Fig. 3: die Anordnung nach den Fign. 1 und 2 in der Draufsicht in Richtung des Pfeils III in Fig. 1,
- Fig. 4: eine zweite Bauart einer Vorrichtung zum Reinigen von Werkstück-Auflageleisten und

- Fig. 5: die Anordnung nach Fig. 4 in der Ansicht in Richtung des Pfeils V in Fig. 4.

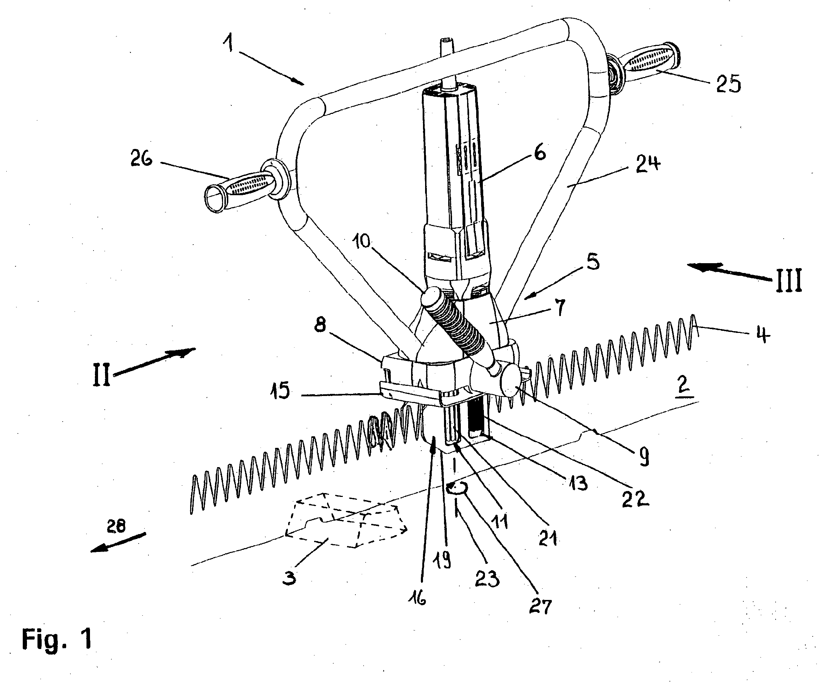

Ausweislich Fig. 1 wird eine Vorrichtung 1 zum Reinigen einer Auflageleiste 2 eingesetzt, wie sie bekanntermaßen an Bearbeitungsmaschinen zur Lagerung von Werkstücken dient. Eine Mehrzahl von nebeneinander angeordneten Auflageleisten 2 bilden dabei eine Werkstückauflage. Die Auflageleisten 2 ihrerseits ruhen auf einer Tragstruktur, die in Querrichtung der Auflageleisten 2 verlaufende und in Fig. 1 andeutungsweise dargestellte Querträger 3 aufweist. An der Oberseite ist jede Auflageleiste 2 mit zahnartigen Spitzen 4 versehen, die punktuelle Auflagen für das betreffende Werkstück bilden.

Als Folge der Werkstückbearbeitung lagern sich an den Auflageleisten 2, insbesondere an deren Spitzen 4, Verunreinigungen ab, welche die Funktionsfähigkeit der Werkstückauflage beeinträchtigen.

Die beispielhaft gezeigte Auflageleiste 2 bildet einen Teil der Werkstückauflage an einer Laserschneidmaschine für die Blechbearbeitung. Während des thermischen Schneidprozesses fließt mittels des Laserschneidstrahls geschmolzenes Metall aus dem Schnittspalt zu der Werkstückauflage hin ab. An den Spitzen 4 der Auflageleisten 2 bilden sich Schlackeablagerungen, wie sie in Fig. 1 an zwei Spitzen 4 der Auflageleiste 2 angedeutet sind. Aufgrund dieser Schlackeablagerungen ist eine ebene Auflage des Werkstückes auf den Auflageleisten 2 nicht mehr gewährleistet. Die Schlackeablagerungen sind daher von Zeit zu Zeit zu entfernen.

Zu diesem Zweck kann die Vorrichtung 1 während der Dauer von Unterbrechungen der Werkstückbearbeitung an den in Einbaulage verbleibenden Auflageleisten 2 eingesetzt werden. Alternativ besteht die Möglichkeit, verunreinigte Auflageleisten 2 gegen verunreinigungsfreie Auflageleisten 2 auszutauschen und die verunreinigten Auflageleisten 2 abseits der Bearbeitungsmaschine zu reinigen.

Die Vorrichtung 1 umfasst einen Grundkörper 5 mit einem elektrischen Antriebsmotor 6, einem Getriebegehäuse 7 sowie einem Schaltgehäuse 8. Eine Betätigungswelle 9 ragt seitlich aus dem Schaltgehäuse 8 heraus und ist mit einem Schalthebel 10 versehen.

Nach unten hin stehen Walzen 11, 12, 13, 14 aus dem Schaltgehäuse 8 vor. Die Walze 14 ist in den Abbildungen verdeckt angeordnet. Sie ist baugleich mit der Walze 13 und liegt dieser gegenüber.

Sämtliche Walzen 11, 12, 13, 14 durchsetzen entsprechende Öffnungen an einer Führungsauflage 15, die ihrerseits an dem Schaltgehäuse 8 befestigt und an beiden Längsenden kufenartig aufgebogen ist. Mit der Führungsauflage 15 verschweißt sind an deren Unterseite angeordnete Leitplatten 16, 17. Diese bilden eine Leiteinrichtung 18 und sind an einer ihrer Stirnseiten mit einer abgeschrägten Leitfläche 19, 20 versehen. Die Walzen 11, 12, 13, 14 liegen im Innern von fensterartigen Aussparungen der Leitplatten 16, 17. Die Walzen 11, 12 sind an ihrem Mantel mit Leisten 21 versehen, die in axialer Richtung der Walzen 11, 12 verlaufen und in Walzenumfangsrichtung eine verhältnismäßig große Breite besitzen. Zwischen den Leisten 21 sind in Umfangsrichtung der Walzen 11, 12 Leistenzwischenräume vorgesehen. Die Walzen 13, 14 weisen Leisten 22 auf, die gleichfalls in axialer Walzenrichtung verlaufen, die aber eine wesentlich geringere Breite besitzen als die Leisten 21 an den Walzen 11, 12. Sämtliche Walzen 11, 12, 13, 14 sind an ihren von dem Grundkörper 5 der Vorrichtung 1 abliegenden Enden konisch ausgebildet. Eine Drehachse 23 ist in Fig. 1 für die Walze 11 gezeigt. Die Walzen 12, 13, 14 weisen parallel dazu verlaufende Drehachsen 23 auf.

An der Oberseite des Schaltgehäuses 8 setzt an dem Getriebegehäuse 7 ein in Längsrichtung der Auflageleiste 2 weit ausladender Führungsbügel 24 an. Der Führungsbügel 24 ist an einander gegenüberliegenden Seiten mit Führungshandhaben 25, 26 versehen.

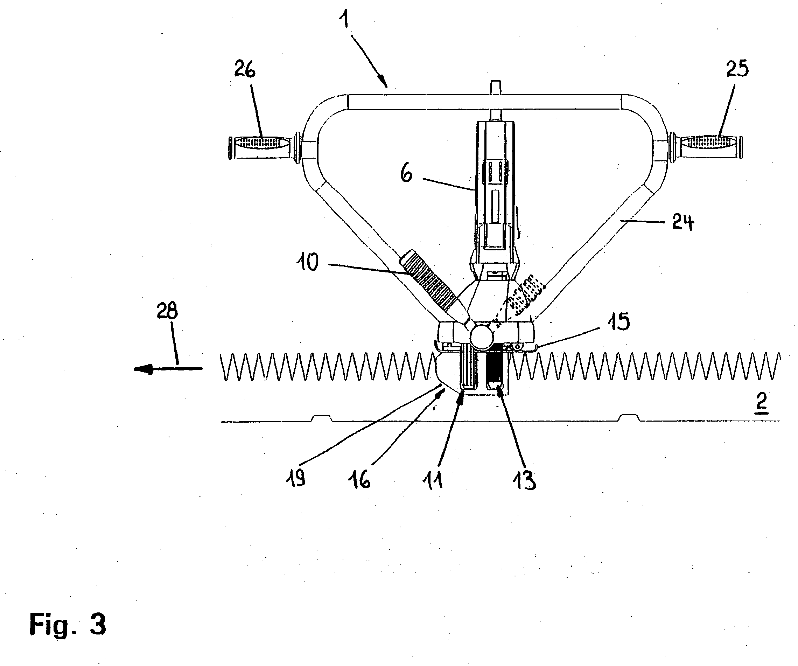

Zu Beginn des Reinigungsvorganges ist die Vorrichtung 1 vom geöffneten in den geschlossenen Zustand zu überführen. Zu diesem Zweck wird der Schalthebel 10 aus der in Fig. 3 gestrichelt dargestellten Schwenkstellung in die in Fig. 3 mit ausgezogenen Linien dargestellte Position überführt. Die damit verbundene Drehbewegung der Betätigungswelle 9 wird über einen an sich bekannten Zustellmechanismus in einander entgegengerichtete Bewegungen der Walzen 11, 13 einerseits sowie der Walzen 12, 14 andererseits umgesetzt. Infolgedessen verringert sich die Spaltweite zwischen den Walzen 11, 13 einerseits und den Walzen 12, 14 andererseits von einem verhältnismäßig großen Wert bei geöffnetem Zustand der Vorrichtung 1 auf einen relativ kleinen Wert bei geschlossenem Zustand der Vorrichtung 1. Der gegenseitige Abstand der Walzen 11, 13 einerseits und der Walzen 12, 14 andererseits bei geschlossenem Zustand der Vorrichtung 1 ist geringfügig kleiner als die Dicke der zu reinigenden Auflageleiste 2.

Im geschlossenen Zustand wird die Vorrichtung 1 schräg von oben her an die zu reinigende Auflageleiste 2 angesetzt. Dieses Ansetzen der Vorrichtung 1 wird durch die konischen Enden der Walzen 11, 12, 13, 14 erleichtert. Der elektrische Antriebsmotor 6 ist zunächst noch ausgeschaltet.

Ist die Vorrichtung 1 zweckentsprechend an der Auflageleiste 2 angesetzt, so wird der elektrische Antriebsmotor 6 zugeschaltet. Er treibt dann die Walzen 11, 13 an der einen Längsseite der Auflageleiste 2 in Richtung eines in Fig. 1 dargestellten Pfeils 27 um die Drehachsen 23 an. Dazu gegenläufig werden von dem Antriebsmotor 6 die Walzen 12, 14 an der gegenüberliegenden Längsseite der Auflageleiste 2 angetrieben. Die Walzen 11, 12, 13, 14 rollen auf der Auflageleiste 2 ab und ziehen dadurch die Auflageleiste 2 in den zwischen ihnen vorgesehenen Spalt ein. Die schräg an der Auflageleiste 2 angesetzte Vorrichtung 1 bewegt sich infolgedessen entlang einer geneigten Bahn in Richtung auf die Spitzen 4 der Auflageleiste 2. Mit der Unterseite der Führungsauflage 15 kommt die Vorrichtung 1 dabei auf den Spitzen 4 der Auflageleiste 2 zu liegen. Durch Zusammenwirken der Führungsauflage 15 einerseits und der Spitzen 4 der Auflageleiste 2 andererseits wird die Vorrichtung 1, ausgehend von ihrer anfänglichen Schrägstellung, mit der Maschinenachse vertikal ausgerichtet.

Beim Einziehen der Auflageleiste 2 vergrößert sich die Spaltweite zwischen den Walzen 11, 13 einerseits und den Walzen 12, 14 andererseits ausgehend von dem anfänglich minimalen Maß auf die Dicke der u.U. verschmutzten Auflageleiste 2. Die zu diesem Zweck erforderliche Relativbewegung der beidseits der Auflageleiste 2 angeordneten Walzenpaare wird gegen die Wirkung einer elastischen, mittels Tellerfedern erzeugten Kraft ausgeführt. Infolge der daraus resultierenden elastischen Rückstellkraft liegen schließlich die Walzen 11, 13 an der einen und die Walzen 12, 14 an der anderen Längsseite der Auflageleiste 2 unter Vorspannung an.

Angetrieben von dem elektrischen Antriebsmotor 6 rollen die Walzen 11, 12, 13, 14 auf den Auflageleisten 2 ab und bewegen dadurch die Vorrichtung 1 in Längsrichtung der Auflageleiste 2, im Einzelnen in einer Vorschubrichtung 28, an der Auflageleiste 2 entlang.

Die Walzen 11, 12, 13, 14 sind dabei sowohl als Vorschuborgane als auch als Reinigungsorgane wirksam. In ihrer Eigenschaft als Reinigungsorgane entfernen sie an der Auflageleiste 2 vorhandene Verunreinigungen. Beispielsweise die in Fig. 1 angedeuteten Schlackeablagerungen werden mahlend abgetragen. Das abgetragene Material wird über die Leistenzwischenräume der Leisten 21 an den Walzen 11, 12 sowie über die Leistenzwischenräume der Leisten 22 an den Walzen 13, 14 unter Schwerkraftwirkung abgeführt. Mittels der Walzen 11, 12 lassen sich insbesondere grobe Verunreinigungen entfernen; die Walzen 13, 14 entfernen die nach der Reinigung durch die Walzen 11, 12 verbliebenen feineren Verschmutzungen. Der Antriebsmotor 6 dient sowohl als Vorschubantriebsmotor als auch zum Antrieb des Reinigungsvorganges.

Wurden Spitzen 4 der Auflageleiste 2 beispielsweise in Folge von unbeabsichtigten seitlichen Belastungen beim Ablegen von Werkstücken auf der Werkstückauflage, aus ihrer ursprünglichen vertikalen Stellung geringfügig seitlich abgebogen, so können die auf der Auflageleiste 2 abrollenden Walzen 11, 12, 13, 14 diese Spitzen 4 in ihre vertikale Ausgangsstellung zurückbiegen.

Zur Führung in Vorschubrichtung 28 wird die Vorrichtung 1 von dem Bediener an einer der Führungshandhaben 25, 26, vorzugsweise an der bei der Vorschubbewegung nacheilenden Führungshandhabe 25 gehalten. Insbesondere bei einer Reinigung von in Einbaulage verbliebenen Auflageleisten 2 kann es erforderlich sein, die Vorrichtung 1 während ihrer Bewegung entlang einer Auflageleiste 2 zu übergeben. In diesem Fall kann die Vorrichtung 1 an der Führungshandhabe 26 von einem Bediener übernommen werden, der sich an der dem Ausgangspunkt der Bewegung der Vorrichtung 1 gegenüberliegenden Seite der betreffenden Werkstückauflage befindet. Nachdem der Führungsbügel 24 in Richtung der Achse der Vorschubbewegung der Vorrichtung 1 verhältnismäßig weit auslädt, kann die Vorrichtung 1 manuell geführt auch an relativ langen Auflageleisten 2 eingesetzt werden. Die Reichweite zweier Bediener an einander gegenüberliegenden Seiten der betreffenden Werkstückauflage wird durch den Führungsbügel 24 auf das erforderliche Maß verlängert.

Zur Unterstützung der manuellen Führung dienen an der Vorrichtung 1 die Führungsauflage 15 und auch die Walzen 11, 12, 13, 14. Aufgrund ihrer kufenartigen Aufbiegungen gleitet die Führungsauflage 15 über die Spitzen 4 der Auflageleiste 2, ohne sich mit den Spitzen 4 oder daran haftenden Verunreinigungen zu verhaken. Auch ist die Führungsauflage 15 derart breit ausgebildet, dass sie nicht nur auf der zu reinigenden Auflageleiste 2 sondern auch auf einer dieser benachbarten Auflageleiste 2 abgestützt werden kann. Die Walzen 11, 12, 13, 14 führen die Vorrichtung 1 seitlich. Dabei bildet das an der einen Seite der Auflageleiste 2 angeordnete Walzenpaar einen Gegenhalter für das Walzenpaar an der jeweils gegenüberliegenden Seite der Auflageleiste 2.

Werden die Walzen 11, 12, 13, 14 abweichend von den dargestellten Verhältnissen mit gegen die Vertikale in Vorschubrichtung 28 geneigten Drehachsen 23 betrieben, so ziehen sie die Vorrichtung 1 mit der Unterseite der Führungsauflage 15 gegen die Spitzen 4 der Auflageleiste 2. Ein unerwünschtes Abheben der Vorrichtung 1 von der Auflageleiste 2 kann dadurch selbsttätig vermieden werden. In demselben Sinne wirkt es sich aus, wenn die Leisten 21, 22 bei Kontakt mit der Auflageleiste 2 nicht vertikal sondern gleichfalls gegen die Vorschubrichtung 28 nach vorne geneigt verlaufen. Eine derartige Neigung ergibt sich beispielsweise bei einem entsprechenden wendelartigen Verlauf der Leisten 21, 22.

Ebenfalls der Führung der Vorrichtung 1 bei der Vorschubbewegung dient die Leiteinrichtung 18. Werden Auflageleisten 2 in Einbaulage gereinigt, so verhindert die Leiteinrichtung 18 Kollisionen zwischen den Walzen 11, 12, 13, 14 und unerwartet hohen Querträgern 3 der Werkstückauflage. In derartigen Fällen laufen die Leitplatten 16, 17 mit ihren Leitflächen 19, 20 auf den betreffenden Querträger 3 auf und führen die Vorrichtung 1 bei fortgesetzter Vorschubbewegung über den Querträger 3 hinweg.

Nicht entfernbaren Unebenheiten an den Längsseiten einer Auflageleiste 2 können die Walzen 11, 12, 13, 14 aufgrund ihrer federnden Abstützung in Querrichtung der Auflageleiste 2 bis zu einem gewissen Maß ausweichen. Ist ein derartiges Ausweichen nicht möglich und wird dementsprechend die Vorschubbewegung der Vorrichtung 1 blockiert, so sorgt eine in dem Antriebsstrang der Vorrichtung 1 zwischen dem elektrischen Antriebsmotor 6 und den Walzen 11, 12, 13, 14 vorgesehene Sicherheitskupplung dafür, dass die Komponenten des Vorschubantriebes nicht beschädigt werden.

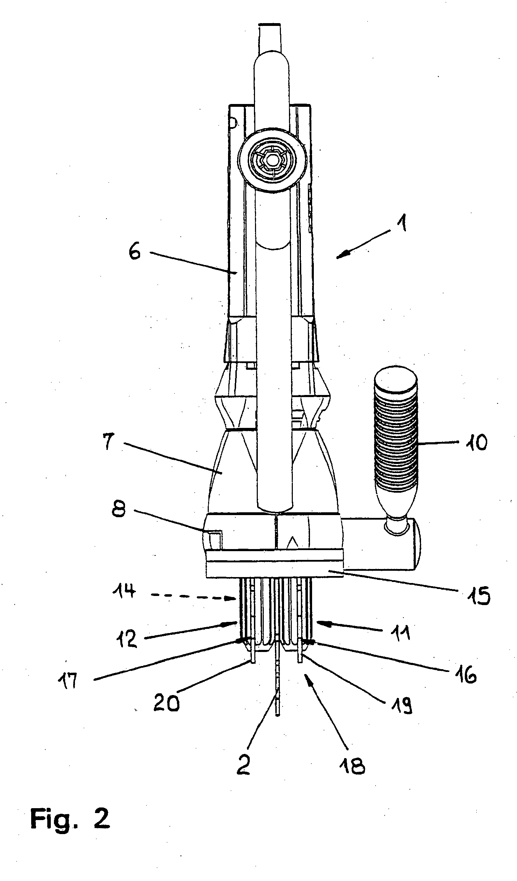

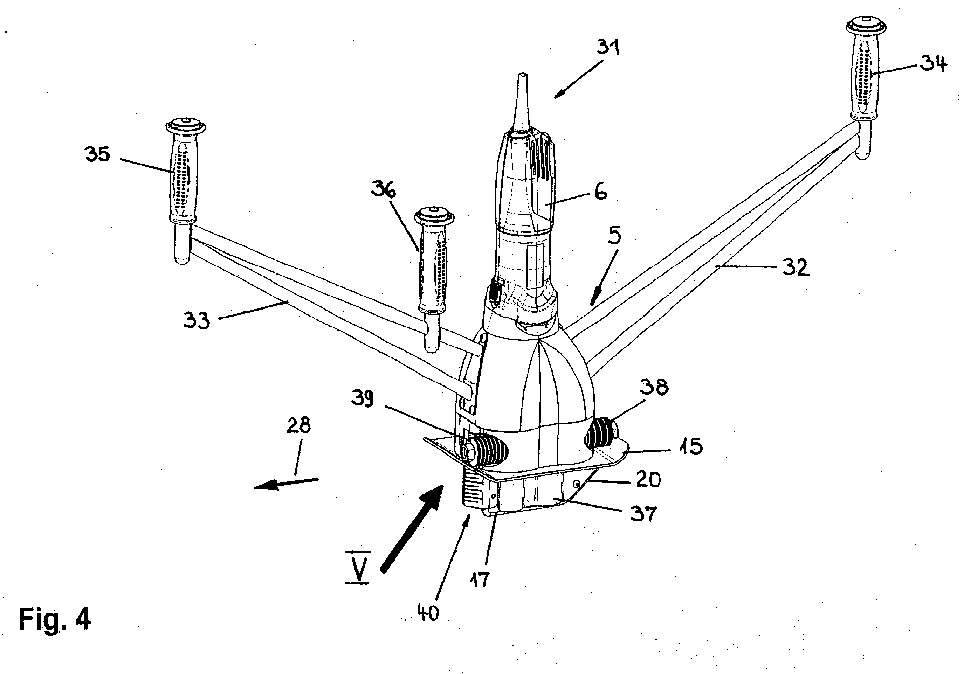

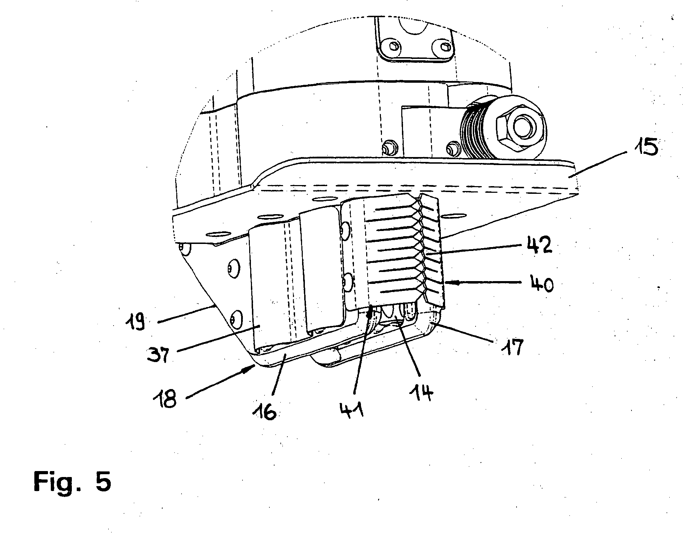

Eine Vorrichtung 31 zum Reinigen von Auflageleisten, wie sie in den Fign. 4 und 5 gezeigt ist, stimmt in Aufbau und Funktionsweise weitgehend mit der Vorrichtung 1 nach den Fign. 1 bis 3 überein.

Von der Vorrichtung 1 unterscheidet sich die Vorrichtung 31 hinsichtlich der für ihre Handhabung vorgesehenen Einrichtungen. So weist die Vorrichtung 31 keinen Führungsbügel sondern stattdessen seitlich vorkragende Führungsausleger 32, 33 mit daran vorgesehenen Führungshandhaben 34, 35 auf. Zusätzlich ist an dem Führungsausleger 33 nahe dem Grundkörper 5 der Vorrichtung 31 ein Wendegriff 36 vorgesehen. Der Wendegriff 36 erleichtert die Handhabung der Vorrichtung 31 bei deren Bewegungsrichtungsumkehr. Ist etwa eine Auflageleiste in Einbaulage an einer Werkstückauflage über ihre gesamte Länge gereinigt, so ist die Vorrichtung 31 vor dem Ansetzen an einer benachbarten Auflageleiste um 180° zu wenden. Der Wendegriff 36 bietet dabei dem Bediener der Vorrichtung 31 eine für diesen gut erreichbare Handhabe.

Gleichfalls abweichend von der Vorrichtung 1 ist an der Vorrichtung 31 kein Schalthebel vorgesehen zur Veränderung der Spaltweite zwischen den Walzenpaaren, die einander gegenüberliegenden Seiten der zu reinigenden Auflageleiste zugeordnet und in den Fign. 4 und 5 weitestgehend verdeckt sind. Die Walzen 11, 13 einerseits sowie die Walzen 12, 14 andererseits sind an der Vorrichtung 31 durch jeweils ein Abdeckblech 37 verkleidet und daher in den Abbildungen nur ansatzweise erkennbar. Auch an der Vorrichtung 31 sind die Walzen 11, 13; 12, 14 parallel zu sich selbst und gegen die Wirkung einer elastischen Rückstellkraft in Querrichtung der zu beaufschlagenden Auflageleistenflächen auslenkbar. Erzeugt wird die elastische Rückstellkraft mittels Tellerfederpaketen 38, 39.

Im Ausgangszustand der Vorrichtung 31 ist die Spaltweite zwischen den Walzen 11, 13 einerseits und den Walzen 12, 14 andererseits geringfügig kleiner als die Dicke der zu reinigenden Auflageleiste. Das Ansetzen der Vorrichtung 31 an einer zu reinigenden Auflageleiste und das Einziehen der Auflageleiste in den Spalt zwischen den Walzen 11, 13; 12, 14 erfolgt wie vorstehend zu den Fign. 1 bis 3 beschrieben. Im Betrieb liegen auch die Walzen 11, 13; 12, 14 der Vorrichtung 31 unter Vorspannung an den Längsseiten der betreffenden Auflageleiste an.

Zusätzlich zu den Walzen 11, 13; 12, 14 weist die Vorrichtung 31 als Reinigungsorgane bürstenartige Reinigungselemente 40, 41 auf.

Wie insbesondere aus Fig. 5 hervorgeht, sind die bürstenartigen Reinigungselement 40, 41 an den Leitplatten 16, 17 der Leiteinrichtung 18 angebracht. In Vorschubrichtung 28 gesehen, eilen sie den Walzen 11, 13; 12, 14 nach. Sie besitzen zungenartige Segmente 42, mit welchen sie die zu reinigende Auflageleiste an einander gegenüberliegenden Längsseitenflächen unter Vorspannung beaufschlagen. Die zungenartigen Segmente 42 der bürstenartigen Reinigungselemente 40, 41 dringen bei der Bewegung der Vorrichtung 31 längs der betreffenden Auflageleiste auch in die Zwischenräume zwischen den Spitzen 4 der Auflageleiste ein und entfernen dort gegebenenfalls vorhandene Verschmutzungen.

Anstelle der vorstehend beschriebenen manuellen Führung der Vorrichtungen 1, 31 ist auch eine maschinelle Führung denkbar. Zu diesem Zweck können beispielsweise Bewegungsachsen der mit den zu reinigenden Auflageleisten 2 versehenen Bearbeitungsmaschine genutzt werden. Etwa an Laserschneidmaschinen lassen sich die Vorrichtungen 1, 31 insbesondere mit Hilfe der Bewegungsachsen eines Laserschneidkopfes an verunreinigten Auflageleisten 2 entlang bewegen.

## Patentansprüche

1. Maschinelle Vorrichtung zum Reinigen von Auflageleisten (2) von Werkstückauflagen an Maschinen für die Werkstückbearbeitung, insbesondere an Maschinen zum thermischen Schneiden von Werkstücken,
mit wenigstens einem Reinigungsorgan (11, 12, 13, 14, 40 41), und
mit einer Vorschubeinrichtung, mittels derer das Reinigungsorgan (11, 12, 13, 14, 40 41) und eine zu reinigende Auflageleiste (2) mit einer Vorschubbewegung in Längsrichtung der Auflageleiste (2) relativ zueinander bewegbar sind,
**dadurch gekennzeichnet, dass**
als Vorschubeinrichtung ein motorischer Vorschubantrieb vorgesehen ist mit wenigstens einem Vorschubantriebsmotor (6) sowie mit wenigstens einem Vorschuborgan (11, 12, 13, 14),
und dass das Vorschuborgan (11, 12, 13, 14) einen an die Auflageleiste (2) anlegbaren Teil umfasst, welcher bei Anliegen an der Auflageleiste (2) mittels des Vorschubantriebsmotors (6) unter Erzeugung der Vorschubbewegung in Längsrichtung der Auflageleiste (2) antreibbar ist.

2. Maschinelle Vorrichtung nach Anspruch 1, **dadurch gekennzeichnet, dass** wenigstens ein Vorschuborgan (11, 12, 13, 14) um eine Drehachse (23) antreibbar ist, welche in Querrichtung zu der mittels der Vorschubeinrichtung erzeugbaren Vorschubbewegung verläuft, und dass das Vorschuborgan (11, 12, 13, 14) derart ausgebildet ist, dass es im angetriebenen Zustand unter Erzeugung der Vorschubbewegung auf der Auflageleiste (2) abrollt.

3. Maschinelle Vorrichtung nach einem der vorhergehenden Ansprüche, **dadurch gekennzeichnet, dass** wenigstens einem Vorschuborgan (11, 12, 13, 14) wenigstens ein Gegenhalter (11, 12, 13, 14) zugeordnet ist, welcher an diejenige Seite der Auflageleiste (2) anlegbar ist, welche der dem Vorschuborgan (11, 12, 13, 14) zugeordneten Seite der Auflageleiste gegenüberliegt, und dass der Gegenhalter eine Führungseinrichtung bildet, mittels derer das Reinigungsorgan (11, 12, 13, 14, 40, 41) und/oder die Auflageleiste (2) bei der Vorschubbewegung in Längsrichtung der Auflageleiste (2) führbar ist.

4. Maschinelle Vorrichtung nach einem der vorhergehenden Ansprüche, **dadurch gekennzeichnet, dass** wenigstens einem Vorschuborgan (11, 12, 13, 14) als Gegenhalter ein weiteres Vorschuborgan (11, 12, 13, 14) zugeordnet ist, welches mittels eines Vorschubantriebsmotors (6) um eine gleichgerichtete Drehachse (23) gegensinnig antreibbar ist.

5. Maschinelle Vorrichtung nach einem der vorhergehenden Ansprüche, **dadurch gekennzeichnet, dass** wenigstens ein Reinigungsorgan (11, 12, 13, 14, 40, 41) im Betrieb an einer zu reinigenden Auflageleiste (2) in Richtung auf diese vorgespannt ist.

6. Maschinelle Vorrichtung nach einem der vorhergehenden Ansprüche, **dadurch gekennzeichnet, dass** wenigstens ein Vorschuborgan (11, 12, 13, 14) und/oder wenigstens ein Gegenhalter (11, 12, 13, 14) ein Reinigungsorgan (11, 12, 13, 14) ausbildet.

7. Maschinelle Vorrichtung nach einem der vorhergehenden Ansprüche, **dadurch gekennzeichnet, dass** ein und derselben Seite der Auflageleiste (2) zugeordnete und in Richtung der mittels der Vorschubeinrichtung erzeugbaren Vorschubbewegung hintereinander liegende und jeweils ein Reinigungsorgan (11, 12, 13, 14) ausbildende Vorschuborgane (11, 12, 13, 14) an ihrem an die Auflageleiste (2) anlegbaren Teil verschiedenartig ausgebildet sind.

8. Maschinelle Vorrichtung nach einem der vorhergehenden Ansprüche, **dadurch gekennzeichnet, dass** wenigstens ein Vorschuborgan (11, 12, 13, 14) und/oder wenigstens ein Gegenhalter (11, 12, 13, 14) und/oder wenigstens ein Reinigungsorgan (11, 12, 13, 14) an dem an die Auflageleiste (2) anlegbaren Teil wenigstens einen Vorsprung aufweist.

9. Maschinelle Vorrichtung nach einem der vorhergehenden Ansprüche, **dadurch gekennzeichnet, dass** an einem Grundkörper (5) der Vorrichtung in Richtung der mittels der Vorschubeinrichtung erzeugbaren Vorschubbewegung beidseits eine Führungshandhabe (25, 26, 34, 35) vorgesehen ist.

10. Maschinelle Vorrichtung nach einem der vorhergehenden Ansprüche, **dadurch gekennzeichnet, dass** an dem Grundkörper (5) der Vorrichtung eine Leiteinrichtung (18) vorgesehen ist, mittels derer die Vorrichtung bei der Vorschubbewegung relativ zu der Auflageleiste (2) und dabei in Querrichtung der Auflageleiste (2) sowie entlang den Längsseiten der Auflageleiste (2) auslenkbar ist.

## Claims

1. Mechanical device for cleaning support bars (2) of workpiece supports on machines for workpiece processing, in particular on machines for thermal cutting of workpieces, having at least one cleaning member (11, 12, 13, 14, 40, 41), and
having a feed device, by means of which the cleaning member (11, 12, 13, 14, 40, 41) and a support bar (2) which is intended to be cleaned can be moved relative to each other with a feed movement in the longitudinal direction of the support bar (2),
**characterised in that**
a motorised feed drive having at least one feed drive motor (6) and having at least one feed member (11, 12, 13, 14) is provided as the feed device,
and **in that** the feed member (11, 12, 13, 14) comprises a portion which can be placed on the support bar (2) and which, when placed on the support bar (2), can be driven by means of the feed drive motor (6) with the feed movement in the longitudinal direction of the support bar (2) being produced.

2. Mechanical device according to claim 1, **characterised in that** at least one feed member (11, 12, 13, 14) can be driven about a rotation axis (23) which extends in the transverse direction with respect to the feed movement which can be produced by means of the feed device, and **in that** the feed member (11, 12, 13, 14,) is constructed in such a manner that in the driven state it rolls on the support bar (2) with the feed movement being produced.

3. Mechanical device according to either of the preceding claims, **characterised in that** there is associated with at least one feed member (11, 12, 13, 14) at least one counter-retention member (11, 12, 13, 14) which can be placed against the side of the support bar (2) opposite the side of the support bar associated with the feed member (11, 12, 13, 14), and **in that** the counter-retention member forms a guiding device by means of which the cleaning member (11, 12, 13, 14, 40, 41) and/or the support bar (2) can be guided during the feed movement in the longitudinal direction of the support bar (2).

4. Mechanical device according to any one of the preceding claims, **characterised in that** there is associated with at least one feed member (11, 12, 13, 14) as a counter-retention member an additional feed member (11, 12, 13, 14) which can be driven by means of a feed drive motor (6) in the opposite direction about a parallel rotation axis (23).

5. Mechanical device according to any one of the preceding claims, **characterised in that** at least one cleaning member (11, 12, 13, 14, 40, 41) during operation on a support bar (2) which is intended to be cleaned is pretensioned in the direction towards the support bar (2).

6. Mechanical device according to any one of the preceding claims, **characterised in that** at least one feed member (11, 12, 13, 14) and/or at least one counter-retention member (11, 12, 13, 14) forms a cleaning member (11, 12, 13, 14).

7. Mechanical device according to any one of the preceding claims, **characterised in that** feed members (11, 12, 13, 14) which are associated with one and the same side of the support bar (2) and which are located one behind the other in the direction of the feed movement which can be produced by means of the feed device and which each form a cleaning member (11, 12, 13, 14) are constructed differently at the portion thereof which can be placed on the support bar (2).

8. Mechanical device according to any one of the preceding claims, **characterised in that** at least one feed member (11, 12, 13, 14) and/or at least one counter-retention member (11, 12, 13, 14) and/or at least one cleaning member (11, 12, 13, 14) has/have at least one projection at the portion which can be placed on the support bar (2).

9. Mechanical device according to any one of the preceding claims, **characterised in that** a guiding handle (25, 26, 34, 35) is provided on the two sides of a base member (5) of the device in the direction of the feed movement which can be produced by means of the feed device.

10. Mechanical device according to any one of the preceding claims, **characterised in that** there is provided on the base member (5) of the device a guide device (18) by means of which the device can be redirected during the feed movement relative to the support bar (2) and in the transverse direction of the support bar (2) and along the longitudinal sides of the support bar (2).

## Revendications

1. Dispositif automatique dévolu au nettoyage de barrettes d'appui (2) de supports de pièces équipant des machines d'usinage de pièces, en particulier des machines affectées au découpage thermique de pièces, comprenant
au moins un organe de nettoyage (11, 12, 13, 14, 40, 41) et
un système d'avance au moyen duquel ledit organe de nettoyage (11, 12, 13, 14, 40, 41), et une barrette d'appui (2) devant être nettoyée, peuvent être mus l'un par rapport à l'autre en un mouvement d'avance, dans la direction longitudinale de ladite barrette d'appui (2), **caractérisé par le fait**
**qu'**un entraînement d'avance motorisé, prévu en tant que système d'avance, comporte au moins un moteur (6) de l'entraînement d'avance, ainsi qu'au moins un organe d'avancement (11, 12, 13, 14) ;
et **que** ledit organe d'avancement (11, 12, 13, 14) inclut une partie qui peut être appliquée contre la barrette d'appui (2) et qui, lors de la mise en applique contre ladite barrette d'appui (2), peut être entraînée au moyen du moteur (6) de l'entraînement d'avance, en engendrant le mouvement d'avance dans la direction longitudinale de ladite barrette d'appui (2).

2. Dispositif automatique selon la revendication 1, **caractérisé par le fait qu'**au moins un organe d'avancement (11, 12, 13, 14) peut être entraîné autour d'un axe de rotation (23) s'étendant dans la direction transversale par rapport au mouvement d'avance pouvant être engendré au moyen du système d'avance ; et **par le fait que** ledit organe d'avancement (11, 12, 13, 14) est réalisé de façon telle qu'il roule sur la barrette d'appui (2), à l'état entraîné, en engendrant ledit mouvement d'avance.

3. Dispositif automatique selon l'une des revendications précédentes, **caractérisé par le fait qu'**au moins un élément d'adossement (11, 12, 13, 14), associé à au moins un organe d'avancement (11, 12, 13, 14), peut être mis en applique contre le côté de la barrette d'appui (2) pointant à l'opposé du côté de ladite barrette d'appui qui est associé audit organe d'avancement (11, 12, 13, 14) ; et **par le fait que** ledit élément d'adossement forme un système de guidage au moyen duquel l'organe de nettoyage (11, 12, 13, 14, 40, 41), et/ou la barrette d'appui (2), peu(ven)t être guidé(e)(s) au cours du mouvement d'avance dans la direction longitudinale de ladite barrette d'appui (2).

4. Dispositif automatique selon l'une des revendications précédentes, **caractérisé par le fait qu'**un organe additionnel d'avancement (11, 12, 13, 14), associé à au moins un organe d'avancement (11, 12, 13, 14) en tant qu'élément d'adossement, peut être entraîné dans le sens contraire au moyen d'un moteur (6) de l'entraînement d'avance, autour d'un axe de rotation (23) orienté dans la même direction.

5. Dispositif automatique selon l'une des revendications précédentes, **caractérisé par le fait qu'**au moins un organe de nettoyage (11, 12, 13, 14, 40, 41) est précontraint, en service, en direction d'une barrette d'appui (2) devant être nettoyée.

6. Dispositif automatique selon l'une des revendications précédentes, **caractérisé par le fait qu'**au moins un organe d'avancement (11, 12, 13, 14), et/ou au moins un élément d'adossement (11, 12, 13, 14), matérialise(nt) un organe de nettoyage (11, 12, 13, 14).

7. Dispositif automatique selon l'une des revendications précédentes, **caractérisé par le fait que** des organes d'avancement (11, 12, 13, 14) associés à un seul et même côté de la barrette d'appui (2), placés en succession dans la direction du mouvement d'avance pouvant être engendré au moyen du système d'avance, et matérialisant un organe de nettoyage (11, 12, 13, 14) respectif, offrent des réalisations différentes sur leur partie pouvant être mise en applique contre ladite barrette d'appui (2).

8. Dispositif automatique selon l'une des revendications précédentes, **caractérisé par le fait qu'**au moins un organe d'avancement (11, 12, 13, 14) et/ou au moins un élément d'adossement (11, 12, 13, 14), et/ou au moins un organe de nettoyage (11, 12, 13, 14), présente(nt) au moins une saillie sur la partie pouvant être mise en applique contre la barrette d'appui (2).

9. Dispositif automatique selon l'une des revendications précédentes, **caractérisé par le fait qu'**une poignée de guidage (25, 26, 34, 35) est prévue de part et d'autre, sur un corps de base (5) dudit dispositif, dans la direction du mouvement d'avance pouvant être engendré au moyen du système d'avance.

10. Dispositif automatique selon l'une des revendications précédentes, **caractérisé par** la présence, sur le corps de base (5) dudit dispositif, d'un système directeur (18) au moyen duquel ledit dispositif peut être dévié au cours du mouvement d'avance par rapport à la barrette d'appui (2), dans la direction transversale de ladite barrette d'appui (2), ainsi que le long des côtés longitudinaux de ladite barrette d'appui (2).
